# EUROPÄISCHE PATENTSCHRIFT

(11) **EP 0 954 950 B1**
(45) Veröffentlichungstag und Bekanntmachung des Hinweises auf die Patenterteilung: **27.03.2002**
(21) Anmeldenummer: 97951831.3
(22) Anmeldetag: 08.12.1997
(51) Int. Cl.: H05B 41/36

(54) **ANORDNUNG ZUM SCHUTZ GEGEN ÜBERTEMPERATUR EINES STEUERGERÄTS FÜR GASENTLADUNGSLAMPEN**
OVERHEATING PROTECTION DEVICE FOR A CONTROL DEVICE IN GAS DISCHARGE LAMPS
DISPOSITIF POUR PROTEGER CONTRE UN ECHAUFFEMENT UN APPAREIL DE COMMANDE DESTINE A DES LAMPES A DECHARGE

(30) Priorität: 25.01.1997 DE 19702687
(43) Veröffentlichungstag der Anmeldung: 10.11.1999
(73) Patentinhaber: ROBERT BOSCH GMBH, 70442 Stuttgart (DE)
(72) Erfinder: SEILER, Hartmut, D-76532 Baden-Baden (DE); KERN, Robert, D-77830 Bühlertal (DE)
(86) Internationale Anmeldenummer: DE9702853
(87) Internationale Veröffentlichungsnummer: WO9833360

(56) Entgegenhaltungen:
- WO-A-96/22007
- DE-A- 4 406 533
- US-A- 4 355 344
- US-A- 5 635 799

## Beschreibung

### Stand der Technik

Die Erfindung geht aus von einer Anordnung zum Schutz gegen Übertemperatur eines Steuergeräts für Gasentladungslampen gemäß der im Oberbegriff des Anspruchs 1 definierten Gattung.

Bei einer bekannten Anordnung dieser Art zur Anpassung der Leistung einer Gasentladungslampe, wie sie in der DE 44 39 812 beschrieben ist, ist ein Steuergerät zur Energieversorgung der Gasentladungslampe vorgesehen. Das Steuergerät enthält einen DC/DC-Wandler, der eine Gleichspannung in eine andere Gleichspannung wandelt sowie eine Brückenschaltung, insbesondere eine H-Brücke, in deren Diagonalzweig die Gasentladungslampe liegt. Durch die Brückenschaltung wird die Gasentladungslampe mit Wechselspannung bzw. Wechselstrom versorgt. Es erfolgt eine Regelung der der Gasentladungslampe zugeführten Leistung. Bei einer Reduzierung der mittleren Lampenleistung gegenüber dem Nennbetrieb ist eine Verlängerung der Periodendauer der Lampenwechselspannung oder des Lampenwechselstroms vorgesehen. Dadurch wird die Niederfrequenz, mit der die Lampe betrieben wird noch weiter abgesenkt. Diese Leistungsabsenkung dient gegebenenfalls auch zum Schutz des Steuergerätes gegen Übertemperatur, um es vor Zerstörung zu bewahren.

Neben dieser bekannten Verlängerung der Periodendauer zur Verbesserung des Umpolvorganges bei Minderleistung, und zur Vermeidung von schädlichen Übertemperaturen im Steuergerät, ist es auch bekannt, die Temperatur eines Steuergerätes durch einen Sensor zu ermitteln, und daraufhin die maximale Ausgangsleistung zu begrenzen.

### Vorteile der Erfindung

Die erfindungsgemäße Anordnung mit den kennzeichnenden Merkmalen des Anspruchs 1, hat demgegenüber den entscheidenden Vorteil, daß ohne Einsatz eines Temperatursensors die Zerstörung des Steuergerätes durch Übertemperatur und/oder zu hohe Belastung auf einfache und kostengünstige Weise vermieden werden kann.

Gemäß der Erfindung ist prinzipiell bei der Anordnung zum Schutz gegen Übertemperatur eines Steuergeräts für Gasentladungslampen vorgesehen, mittels des Steuergerätes den Ausgangswert des Leistungsreglers, also die Steuerspannung des DC/DC-Wandlers, zu betrachten als Stellgröße, und den Eingangswert des Leistungsreglers, zu betrachten als Sollwert, zu ermitteln, das Verhältnis dieser beiden Werte, Stellgröße zu Sollwert, zu bilden, und diesen festgestellten Verhältniswert zur Begrenzung der Ausgangsleistung des Steuergerätes zu verwenden.

Durch die in den weiteren Ansprüchen niedergelegten Maßnahmen sind vorteilhafte Weiterbildungen und Verbesserungen der im Anspruch 1 angegebenen Anordnung zum Schutz gegen Übertemperatur eines Steuergeräts für Gasentladungslampen möglich.

Gemäß einer besonders vorteilhaften Ausgestaltung der erfindungsgemäßen Anordnung enthält der DC/DC-Wandler MOSFET-Transistoren als Schalttransistoren.

Entsprechend einer besonders vorteilhaften Ausgestaltung der Erfindung enthält das Steuergerät einen Mikrokontroller und der Regler ist als Programm im Mikrokontroller vorgesehen und wird zur Leistungsbegrenzung softwaremäßig realisiert.

In weiterer zweckmäßiger Ausgestaltung der erfindungsgemäßen Anordnung findet sie zur Minderung der Verlustleistung des Steuergerätes bei Betrieb der Gasentladungslampe, insbesondere bei Brennbetrieb unter Normalleistung, zur Vermeidung von Übertemperatur am Steuergerät Verwendung.

Gemäß einer besonders vorteilhaften Anwendung der erfindungsgemäßen Anordnung findet diese Verwendung in Kraftfahrzeugen zum Betrieb von Gasentladungslampen, insbesondere Hochdruck-Gasentladungslampen, in Scheinwerfern.

### Beschreibung des Ausführungsbeispiels

Vorliegender Erfindung liegt die Erkenntnis zugrunde, daß bei höherer Temperatur das Verhältnis von Ausgangswert des Leistungsreglers, also insbesondere die Steuerspannung des DC/DC-Wandlers, die als Stellgröße zu betrachten ist, und Eingangswert am Leistungsregler, zu betrachten als Sollwert, größer wird. Gemäß der Erfindung werden mittels des Steuergerätes diese beiden Größen ermittelt und dann daraus das Verhältnis dieser beiden Werte, Stellgröße zu Sollwertgröße also, gebildet. Dieses Verhältnis stellt einen Wert für den Wirkungsgrad und somit der Temperatur des Steuergerätes dar. Dieses ermittelte Verhältnis kann zur Begrenzung der Ausgangsleistung des Steuergerätes verwendet werden.

Gemäß einem bevorzugten Ausführungsbeispiels enthält der DC/DC-Wandler MOSFET-Transistoren als Schalttransistoren. Bei solchen Spannungswandlern gilt generell, daß der Drain-Source-Widerstand eines Schalttransistors im eingeschalteten Zustand, R_{DSon},mit höherer Temperatur höher wird und sich daher der Wirkungsgrad verschlechtert. Außerdem wächst der Kupferwiderstand der Wandlerinduktivität. Ebenfalls werden die Schaltverluste der Wandlerdiode größer. Die einzige Größe, die mit steigender Temperatur weniger Verluste einbringt, ist die Diodenflußspannung. Dieser reduzierende Einfluß kompensiert die Verschlechterung des Wirkungsgrades jedoch nur zu einem sehr geringen Teil.

Die Ausgangsleistung des Steuergerätes wird auf einen bestimmten, möglichst konstanten Wert geregelt. Dadurch wird durch den Integral-Anteil des Reglers die Verschlechterung des Wirkungsgrades ausgeregelt. Aufgrund dieser Gegebenheit wird erfindungsgemäß das Verhältnis Ausgang des Reglers, betrachtet als Stellgröße, zu Eingang des Reglers, betrachtet als Sollwert, ermittelt und dann als Wert für den Wirkungsgrad und damit auch die Temperatur ausgewertet. Damit die Temperatur nicht über zulässige Werte ansteigt, ist dieser Verhältniswert zur Steuerung und zur Begrenzung der Ausgangsleistung zu verwenden.

Wenn im DC/DC-Wandler das current-mode-Verfahren mit Stromerfassung über dem Spannungsabfall über der Drain-Source-Widerstandstrecke des Schalttransistors angewendet wird, dann ist die Änderung des erfindungsgemäß ermittelten Verhältnisses Stellgröße zu Sollwert noch ausgeprägter und daher noch besser für solcher Art ausgebildete Steuergeräte geeignet.

Entsprechend einem besonders geeigneten Ausführungsbeispiel enthält das Steuergerät einen Mikrokontroller und der Regler ist als Programm im Mikrokontroller vorgesehen und die Leistungsbegrenzung wird softwäremäßig realisiert. Dadurch entstehen keine besonderen Kosten für Bauteile und die Lösung ist sehr flexibel.

Die Erfindung wird bevorzugt zur Minderung der Verlustleistung des Steuergerätes bei Betrieb der Gasentladungslampe, insbesondere bei Brennbetrieb unter Normalleistung, zur Vermeidung von Übertemperatur am Steuergerät verwendet. Eine derartige Verwendung in Kraftfahrzeugen zum Betrieb von Gasentladungslampen, insbesondere Hochdruck-Gasentladungslampen, ist von besonderer Bedeutung für die Sicherheit und Zuverlässigkeit der dort zunehmend angewendeten Steuergeräte.

In vorteilhafter Weise ermöglicht die Erfindung die Begrenzung der Ausgangsleistung des Steuergerätes zum Schutz gegen Übertemperatur, ohne dabei besondere Temperatursensoren oder andere besondere Bauteile verwenden zu müssen.

## Patentansprüche

1. Anordnung zum Schutz gegen Übertemperatur eines Steuergeräts für Gasentladungslampen, wobei das Steuergerät einen DC/DC-Wandler enthält, und eine Regelung der der Gasentladungslampe zugeführten Leistung erfolgt,
**dadurch gekennzeichnet, daß**
mittels des Steuergerätes der Ausgangswert des Leistungsreglers, zu betrachten als Stellgröße, und der Eingangswert des Leistungsreglers, zu betrachten als Sollwert, ermittelt werden,
das Verhältnis dieser beiden Werte, Stellgröße zu Sollwert, gebildet wird, und
dieser festgestellte Verhältniswert zur Begrenzung der Ausgangsleistung des Steuergerätes verwendbar ist.

2. Anordnung nach Anspruch 1, **dadurch gekennzeichnet, daß** der DC/DC-Wandler MOSFET-Transistoren als Schalttransistoren enthält.

3. Anordnung nach einem der vorigen Ansprüche, **dadurch gekennzeichnet, daß** das Steuergerät einen Mikrokontroller enthält und daß der Regler als Programm im Mikrokontroller vorgesehen und zur Leistungsbegrenzung realisiert ist.

4. Anordnung nach einem der vorigen Ansprüche, **dadurch gekennzeichnet, daß** sie zur Minderung der Verlustleistung des Steuergerätes bei Betrieb der Gasentladungslampe, insbesondere bei Brennbetrieb unter Normalleistung, zur Vermeidung von Übertemperatur am Steuergerät verwendet ist.

5. Anordnung nach einem der vorigen Ansprüche, **gekennzeichnet durch** die Verwendung in Kraftfahrzeugen zum Betrieb von Gasentladungslampen, insbesondere Hochdruck-Gasentladungslampen, in Scheinwerfern.

## Claims

1. Arrangement for protecting against overtemperature of a control unit for gas discharge lamps, the control unit including a DC/DC converter, and the power fed to the gas discharge lamp being regulated, **characterized in that** the output value of the power regulator, which is to be regarded as manipulated variable, and the input value of the power regulator, which is to be regarded as setpoint, are determined by means of the control unit, the ratio of these two values, manipulated variable and setpoint, is formed, and this - determined value of the ratio can be used to limit the output power of the control unit.

2. Arrangement according to Claim 1, **characterized in that** the DC/DC converter includes MOSFET transistors as switching transistors.

3. Arrangement according to one of the preceding claims, **characterized in that** the control unit includes a microcontroller, and **in that** the regulator is provided as a program in the microcontroller and is realized for the purpose of power limitation.

4. Arrangement according to one of the preceding claims, **characterized in that** it is used to reduce the power loss of the control unit during operation of the gas discharge lamp, in particular during burning operation at normal performance, in order to avoid overtemperature at the control unit.

5. Arrangement according to one of the preceding claims, **characterized by** use in motor vehicles in order to operate gas discharge lamps, in particular high-pressure gas discharge lamps, in headlamps.

## Revendications

1. Dispositif de protection contre l'échauffement d'un appareil de commande pour lampes à décharge, l'appareil de commande comprenant un transformateur DC/DC avec régulation de la puissance fournie à la lampe à décharge,
**caractérisé en ce que**
l'appareil de commande détermine la valeur de sortie du régulateur de puissance, considérée comme grandeur de réglage et la valeur d'entrée, considérée comme valeur de consigne, forme le rapport de ces deux valeurs, grandeur de réglage et valeur de consigne, et ce rapport établi est utilisable pour réduire la puissance de sortie de l'appareil de commande.

2. Dispositif selon la revendication 1,
**caractérisé en ce que**
le transformateur DC/DC contient des transistors MOSFET en tant que transistors de commutation.

3. Dispositif selon l'une des revendications précédentes,
**caractérisé en ce que**
l'appareil de commande comprend un microcontrôleur et le régulateur est conçu en tant que programme du microcontrôleur et pour la limitation de puissance.

4. Dispositif selon l'une des revendications précédentes,
**caractérisé en ce qu'**
il est utilisé pour réduire la puissance dissipée par l'appareil de commande dans le fonctionnement de la lampe à décharge, en particulier en fonctionnement en combustion sous la tenson nominale, et pour éviter les échauffements de l'appareil de commande.

5. Dispositif selon l'une des revendications précédentes,
**caractérisé par**
son utilisation dans les véhicules pour le fonctionnement de lampes à décharge, en particulier de lampes à décharge à haute pression, dans les projecteurs.
